# DEMANDE DE BREVET EUROPEEN

(11) **EP 4 112 481 A1**
(43) Date de publication de la demande: **04.01.2023**
(21) Numéro de dépôt: 22178324.4
(22) Date de dépôt: 10.06.2022
(51) Int. Cl.: B64F 5/60

(54) **PROCÉDÉ DE CONTRÔLE D'UNE PLURALITÉ DE STATIONS DE CONTRÔLE D'UN AÉRONEF ET SYSTÈME DE CONTRÔLE ASSOCIÉ**

(30) Priorité: 29.06.2021 FR 2106987
(71) Demandeur: Airbus Helicopters, 13725 Marignane Cedex (FR)
(72) Inventeur: DUPUY, Stéphane, 13560 SENAS (FR); DEPARIS, Michel, 13500 MARTIGUES (FR)
(74) Mandataire: GPI Brevets

(57) **Abrégé**

La présente invention concerne un procédé et un système de contrôle d'une pluralité de stations de contrôle (2, 3, 4, 5, 12) d'un aéronef (1).

Selon l'invention, le procédé de contrôle comporte une détermination d'une position courante d'un terminal électroportatif par rapport audit aéronef (1), une identification d'une station de contrôle courante (12), une détermination d'au moins une image courante (11) dudit aéronef (1) représentative de ladite station de contrôle courante (12), un affichage sur un écran dudit terminal électroportatif de ladite au moins une image courante (11), un affichage d'au moins un composant d'interface graphique (13) en superposition de ladite au moins une image courante (11), une sélection sur ledit terminal électroportatif et une mémorisation dans une mémoire d'un résultat relatif à une inspection d'au moins un organe (6), ledit résultat correspondant à un état validé ou un état non validé dudit au moins un organe (6) inspecté.

## Description

La présente invention concerne un procédé et un système de contrôle d'une pluralité de stations de contrôle d'un aéronef. Une telle station de contrôle peut par exemple consister en une zone ou une partie de l'aéronef comportant au moins un organe à inspecter par un opérateur.

Un tel procédé de contrôle doit en effet être régulièrement effectué au sol sur un aéronef, par exemple toutes les dix heures de vol, afin de maintenir un niveau de sécurité optimal lors des phases de vol. Un tel procédé de contrôle peut être réalisé par exemple par un technicien ou en encore par un pilote de l'aéronef et consiste à inspecter diverses zones de l'aéronef telles que, par exemple, une partie de fuselage, des organes aérodynamiques formant une voilure fixe ou des empennages, un rotor de giravion, un train d'atterrissage, une hélice, un moteur...

Chacune de ces zones de l'aéronef forme alors une station de contrôle pouvant présenter un ou plusieurs organes à contrôler.

De manière générale, les procédés de contrôle connus consistent à utilisant une notice de l'aéronef présentant les différentes stations de contrôle et les organes à inspecter. L'opérateur fait alors un tour de l'aéronef avec cette notice et cherche éventuellement dans les pages de cette notice les problèmes auxquels il pourrait être confronté et les différents organes à vérifier.

Le document US 2018/232132A1 décrit un système de visualisation en trois dimensions de différents organes d'un aéronef pour réaliser la formation d'un technicien à un procédé de contrôle.

Cependant, un tel système est virtuel et n'utilise pas directement l'aéronef. Ainsi, un tel système peut présenter une intuitivité limitée pour permettre l'inspection d'organes d'un aéronef.

Alternativement, le document US 2018/118376A1 décrit quant à lui un procédé pour réaliser un contrôle rapide préalablement à chaque phase de vol d'un aéronef en utilisant un équipement électroportatif. Un tel équipement électroportatif peut alors communiquer à distance avec une pluralité de capteurs pour vérifier que l'aéronef peut réaliser cette phase de vol.

En outre, un tel procédé n'est pas adapté pour permettre un contrôle visuel par un opérateur d'organes de l'aéronef à inspecter.

Le document US 2007/010923 décrit quant à lui un outil de diagnostic pour la réparation d'avion et un procédé utilisant cet outil.

Un inspecteur 4 est équipé d'un dispositif électronique transportable comportant des moyens de visualisation ainsi qu'une mémoire électronique. Ce dispositif peut être, une tablette graphique présentant un écran interactif.

Une tablette graphique intègre également des moyens de communication sans fil. Pour permettre à la tablette graphique de communiquer avec un réseau, la zone d'inspection de l'avion 2 est équipée de bornes 6 couplées à un réseau Ethernet 12. Les informations recueillies par l'inspecteur 4 lors de l'inspection de l'avion 2 sont envoyées par les moyens de transmission de la tablette graphique à une équipe technique de la compagnie aérienne.

L'inspecteur 4, chargé d'examiner l'avion 2 dans le détail, utilise sa tablette graphique pour renseigner toutes les informations nécessaires pour prendre une décision quant aux dommages qu'il vient de découvrir. En outre, une mémoire de la tablette graphique peut intégrer une maquette informatique de l'avion 2 examiné. Bien entendu, un logiciel de visualisation est installé sur la tablette graphique.

La tablette graphique intègre également le manuel de réparation SRM 20 de l'avion 2 considéré. Ce manuel SRM est associé à une base de données de réparations. Les caractéristiques du dommage constaté sont indiquées sur un rapport DRS. Les divers rapports DRS connus de la compagnie aérienne peuvent également être stockés en mémoire au niveau de la tablette graphique.

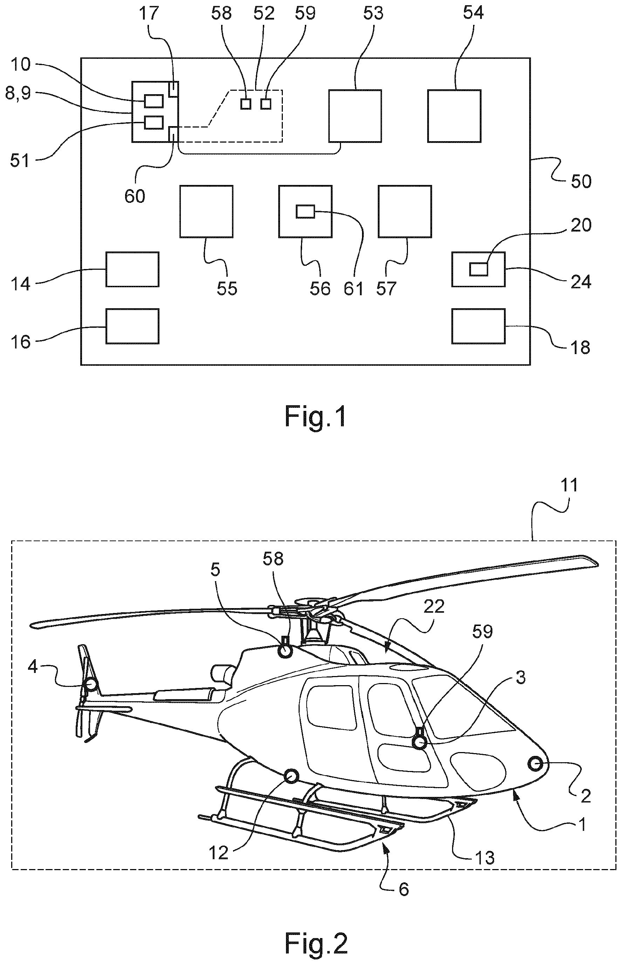

La figure 2 représente un écran 22 d'une tablette graphique. Dans la forme de réalisation représentée, cet écran présente une zone graphique 24 centrale autour de laquelle sont disposées deux colonnes et un bandeau. Ainsi, à gauche de la zone graphique 24 les divers chapitres ATA (pour Air Transport Association) permettant de définir chaque partie d'un avion sont mentionnés dans une première colonne 26.

Pour faire son rapport, l'inspecteur 4 choisit le chapitre ATA concerné par le dommage. Un ascenseur permet de se déplacer dans la liste des chapitres et sous chapitre. Sur la zone graphique 24 centrale, apparaissent alors, sur un schéma à grande échelle, les diverses pièces concernées par ce chapitre et ce sous chapitre. Les différentes pièces peuvent se distinguer en apparaissant par exemple d'une couleur différente du reste du schéma.

Le document US 7 050 894 concerne quant à lui un procédé et un appareil pour diagnostiquer l'état de composants d'aéronef ou d'ensembles de composants d'aéronef afin de fournir des informations de maintenance et de réparation.

Un agent de maintenance M est alors équipé avec un ensemble portatif de traitement de signal 6 faisant partie d'un système de diagnostic 2 et permettant de communiquer avec au moins un capteur d'état 8 prévu individuellement pour chaque composant ou ensemble de composants devant être surveillé et diagnostiqué.

Le mécanicien peut toucher, par exemple, avec un crayon P tout point de coordonnées particulier sur l'écran d'affichage 10 pour ainsi interroger le capteur respectif 8 qui est, par exemple, positionné pour surveiller un conteneur hydraulique 12. Une transmission de signal T d'un émetteur-récepteur 11 vers l'émetteur-récepteur du capteur 8 s'effectue sans fil sur une portée ou distance d'au moins 12 mètre.

En outre, le document US 9 600 944 décrit quant à lui un système d'audit d'aéronefs. Ce système permet d'effectue automatiquement un calcul de pénalité de carburant sur la base des défauts aérodynamiques détectés sur l'aéronef audité.

Un tel système comporte notamment un dispositif informatique portable à écran interactif. La présente invention a alors pour objet de proposer un procédé de contrôle alternatif permettant de s'affranchir des limitations mentionnées ci-dessus. En outre, un tel procédé de contrôle est très intuitif à mettre en œuvre et le système de contrôle présente alors une ergonomie optimale.

L'invention se rapporte donc à un procédé de contrôle d'une pluralité de stations de contrôle d'un aéronef, chaque station de contrôle comportant au moins un organe à inspecter par un opérateur.

Selon l'invention, un tel procédé de contrôle est remarquable en ce qu'il comporte les étapes suivantes :
- détermination d'une position courante d'un terminal électroportatif par rapport à l'aéronef, le terminal électroportatif étant porté par l'opérateur,
- identification avec le terminal électroportatif d'une station de contrôle courante parmi la pluralité de stations de contrôle, ladite identification étant fonction de la position courante du terminal électroportatif par rapport à l'aéronef,

- détermination d'au moins une image courante de l'aéronef représentative de la station de contrôle courante,
- affichage sur un écran du terminal électroportatif de la ou des images courantes de l'aéronef,
- affichage sur l'écran d'au moins un composant d'interface graphique correspondant audit au moins un organe à inspecter de la station de contrôle courante, le ou les composants d'interface graphique étant affichés en superposition de la ou des images courantes, et
- sélection sur le terminal électroportatif et mémorisation dans une mémoire d'un résultat relatif à une inspection du ou des organes, le résultat correspondant à un état validé ou un état non validé du ou des organes inspectés.

Autrement dit, un tel procédé de contrôle est mis en œuvre par l'opérateur en utilisant le terminal électroportatif et en se déplaçant tout autour de l'aéronef de station de contrôle en station de contrôle. De préférence, l'opérateur peut suivre un cheminement prédéfini en suivant par exemple un ordre numérique des différentes stations de contrôle.

Ce procédé de contrôle permet ainsi d'améliorer la fiabilité du contrôle visuel des organes d'un aéronef à inspecter, il peut être utilisé directement par un opérateur formé ou encore servir à la formation de l'opérateur.

Un tel procédé permet ainsi d'identifier automatiquement à partir d'une position courante du terminal électroportatif par rapport à l'aéronef une station de contrôle courante. La station de contrôle courante peut être identifiée directement par le terminal électroportatif sans action manuelle de la part d'un opérateur par exemple en fonction de la distance séparant le terminal électroportatif de cette station de contrôle sur l'aéronef.

En outre, des zones peuvent également être délimitées tout autour de l'aéronef et chaque zone peut alors correspondre à au moins une station de contrôle.

Une fois la station de contrôle courante identifiée automatiquement par le terminal électroportatif, le procédé permet d'afficher une ou plusieurs images courantes de l'aéronef correspondant à cette station de contrôle courante. De telles images courantes peuvent par exemple être acquises préalablement et mémorisées ou encore acquises en temps réel.

Le ou les composants d'interface graphique sont alors superposés sur la ou les images courantes afin d'indiquer à l'opérateur directement sur au moins une image de la ou des images courantes le ou les organes à inspecter. Une telle superposition permet ainsi de rendre intuitif le contrôle des organes de l'aéronef et de faciliter l'identification du ou des organes à inspecter de la station de contrôle courante. L'opérateur voit en effet sur l'écran une représentation en trois dimensions ou en perspective de l'organe qu'il doit inspecter sur l'aéronef avec par exemple une couleur de contour particulière délimitant cet organe sur la ou les images courantes.

Un modèle en trois dimensions de l'aéronef est ainsi préalablement généré et mémorisé. Ce modèle en trois dimensions comporte alors un ensemble de composants d'interface graphique tels que des contours délimitant par exemple une forme, une aire, un volume...

De tels composants d'interface graphique sont alors affichés dans une couleur particulière visible en superposition sur une image courante. Les composants d'interface graphique peuvent également être affichés par exemple en générant un effet de clignotement ou tout autre effet permettant de mettre en évidence une zone de l'image comportant l'organe à inspecter.

Par ailleurs, le terminal électroportatif porté par l'opérateur peut être de type monolithique et est par exemple formé par un ordinateur, une tablette présentant une dalle tactile, un casque ou un équivalent ou encore un « smartphone ».

Selon une alternative de l'invention, le terminal électroportatif porté par l'opérateur peut également être formé par plusieurs parties disjointes. Ainsi, un tel terminal électroportatif peut comporter par exemple un écran déporté au niveau des yeux de l'opérateur comme par exemple sur un casque, une visière ou encore une paire de lunettes et une unité centrale portée par exemple dans une main de l'opérateur ou dans une poche de vêtement.

Avantageusement, le procédé de contrôle peut comporter les étapes suivantes :
- détermination et affichage sur l'écran d'au moins une instruction correspondant audit au moins un organe à inspecter de la station de contrôle courante, une autre mémoire mémorisant pour chaque organe une ou des instructions, et
- sélection au moyen du terminal électroportatif de la ou des instructions par l'opérateur.

Autrement dit, le procédé de contrôle permet de rappeler à l'opérateur toutes les instructions d'inspection correspondant à l'organe inspecté. Le terminal électroportatif est alors à la fois utilisé pour visualiser une liste correspondant aux différentes instructions sur l'écran et pour choisir dans cette liste une des instructions à afficher de manière détaillée par exemple à coté de l'image courante.

Eventuellement, la mémoire stockant le résultat de chaque inspection et l'autre mémoire stockant les instructions d'inspection peuvent former un ensemble monolithique et correspondre à différentes zones de stockage de cet ensemble monolithique.

En pratique, pour chacune des instructions, le procédé de contrôle peut comporter les étapes suivantes :
- détermination d'une donnée d'état représentative d'un état courant de chaque instruction dudit au moins un organe inspecté, l'état courant étant choisi parmi le groupe comportant un état d'instruction validée, un état d'instruction non validée, un état d'instruction oubliée et un état d'instruction non effectuée,
- mémorisation de la donnée d'état, et
- affichage sur l'écran de la donnée d'état.

Par exemple, une telle donnée d'état peut être affichée en utilisant un code couleur prédéterminé. Selon un exemple de réalisation, la couleur d'un fond affiché au niveau de chacune des instructions peut varier en fonction de la donnée d'état.

Ainsi, lorsque l'état courant d'une instruction est l'état d'instruction validée, la couleur de fond de cette instruction peut être verte. Lorsque l'état courant d'une instruction est l'état d'instruction non validée, la couleur de fond de cette instruction peut être rouge.

Lorsque l'état courant d'une instruction est l'état d'instruction oubliée, la couleur de fond de cette instruction peut être orange. Un tel état courant peut être affiché lorsque l'opérateur passe une instruction sans la valider ou sans la déclarer non valide.

Lorsque l'état courant d'une instruction est l'état d'instruction non effectuée, la couleur de fond de cette instruction peut être bleue.

Lorsque l'état courant d'une instruction est l'état d'instruction non validée, l'opérateur peut éventuellement avoir à remplir un formulaire avec le nom du ou des organes non validés. Une fois le formulaire rempli, le procédé de contrôle peut passer automatiquement à l'instruction suivante présentant un état d'instruction non effectuée ou un état d'instruction oubliée d'un organe à inspecter.

Tant que l'état courant d'au moins une instruction d'un organe à inspecter est à l'état d'instruction non validée, l'état d'instruction non effectuée ou l'état d'instruction oubliée alors le résultat relatif à l'inspection de cet organe correspond à un état non validé.

En revanche, lorsque toutes les instructions d'un organe à inspecter sont à l'état d'instruction validée alors le résultat relatif à l'inspection de cet organe correspond à un état validé.

Ainsi, la sélection du résultat correspondant à un état validé de l'organe inspecté peut mise en œuvre automatiquement lorsque toutes les instructions de cet organe sont à l'état d'instruction validée.

Selon un premier mode de fonctionnement, le procédé de contrôle peut comporter une sélection d'un mode de fonctionnement en réalité virtuelle, la détermination de la ou des images courantes de l'aéronef étant opérée par sélection de la ou des images courantes parmi une pluralité d'images mémorisées de l'aéronef.

En d'autres termes, les images courantes affichées sur le terminal électroportatif sont des images préalablement acquises de l'aéronef puis stockée dans une mémoire qui peut être avantageusement en tout ou partie embarquée dans le terminal électroportatif.

Selon un second mode de fonctionnement mis en œuvre de manière complémentaire ou alternative, le procédé de contrôle peut comporter une sélection d'un mode de fonctionnement en réalité augmentée, la détermination d'au moins une image courante de l'aéronef étant opérée au moyen d'une caméra intégrée au terminal électroportatif.

Dans ce cas, les images courantes affichées sur le terminal électroportatif sont acquises par la caméra puis directement affichées sur l'écran. Une mémorisation des images peut être effectuée éventuellement mais n'est pas obligatoire dans ce mode de fonctionnement en réalité augmentée.

En outre, le ou les composants d'interface graphique sont alors calculés en temps réels à partir d'un modèle prédéterminé et pour pouvoir être affichés en superposition de la ou des images courantes. Par exemple, le ou les composants d'interface graphique du modèle peuvent subir des transformations géométriques permettant de les adapter parfaitement dans l'image courante affichée sur l'écran de manière à correspondre avec un organe à inspecter le plus fidèlement possible.

En pratique, le procédé de contrôle peut comporter une acquisition d'au moins une image du ou des organes à inspecter opérée au moyen d'une caméra intégrée au terminal électroportatif et une transmission de la ou des images depuis le terminal électroportatif vers un serveur externe.

L'opérateur peut ainsi filmer ou photographier un organe de l'aéronef à l'aide du terminal électroportatif. La ou les images ainsi acquises peuvent ensuite être transmises via par exemple un protocole de communication sans fil au serveur externe pour pouvoir effectuer des analyses à partir de ces images.

Selon un exemple de réalisation de l'invention compatible avec les précédents, le procédé de contrôle peut comporter un recalage du ou des composants d'interface graphique par rapport à la au moins une image courante, le recalage étant opéré au moyen d'au moins deux émetteurs de signaux électromagnétiques agencés sur l'aéronef, les émetteurs permettant d'émettre des signaux électromagnétiques à 360 degrés autour de l'aéronef.

De tels émetteurs de signaux électromagnétiques permettent ainsi d'identifier de façon précise la position du terminal électroportatif par rapport à l'aéronef.

De tels émetteurs peuvent par exemple être agencés au niveau ou à proximité des différentes stations à inspecter et par exemple à proximité d'un montant de porte, d'une poutre de queue, d'un nez ou encore d'un capot moteur.

Ces émetteurs peuvent être alimentés en électricité au moyen d'une ligne d'alimentation ou d'une batterie rechargeable dédiée. Par ailleurs, de tels émetteurs peuvent être avantageusement positionnés à l'intérieur de l'aéronef.

Les émetteurs peuvent en outre utiliser un protocole de communication sans fil basse fréquence tel que celui déployé par exemple sur le réseau de la société « Sigfox » ou encore un protocole de radio-identification de type RFID, acronyme de l'expression anglaise « Radio Frequency Identification », en utilisant une radio-étiquette agencée par exemple sur le terminal électroportatif.

Alternativement ou de façon complémentaire, le recalage peut également être opéré au moyen d'autres systèmes de reconnaissance agencés sur l'aéronef. De tels autres systèmes peuvent en outre être utilisés en complément pour améliorer la précision de mesure de la position relative du terminal électroportatif par rapport à l'aéronef ou bien en cas de défaillance d'un des émetteurs de signaux électromagnétiques. En outre, la précision de mesure peut être améliorée en combinant entre elles les informations de position issues des au moins deux émetteurs de signaux électromagnétiques et les informations de position issues d'un autre système complémentaire.

Avantageusement, le procédé de contrôle peut comporter une acquisition supplémentaire d'images dudit au moins un organe à inspecter, l'acquisition supplémentaire étant opérée au moyen d'une caméra distante agencée sur un autre aéronef en vol, l'acquisition supplémentaire d'images permettant de réaliser un recalage du ou des composants d'interface graphique par rapport à ladite au moins une image courante.

Un tel autre aéronef peut être dépourvu de pilote et par exemple être un drone de type multirotor. Ce drone peut alors effectuer une phase de vol autour de l'aéronef et communiquer avec le terminal électroportatif pour transmettre les images issues de la caméra distante.

Une telle acquisition supplémentaire d'images peut alors permettre au pilote de rester assis dans le cockpit de l'aéronef, ou ailleurs, et d'effectuer ensuite l'affichage de ces images réelles de l'aéronef sur l'écran du terminal électroportatif. En outre, un ou plusieurs aéronefs peuvent être utilisés simultanément pour effectuer des acquisitions d'images, par exemple au niveau de plusieurs stations de contrôle en même temps. Eventuellement, grâce à ces images affichées sur l'écran, l'opérateur peut choisir en cas de doute d'aller visuellement contrôler un ou plusieurs organes à inspecter d'une ou de plusieurs stations de contrôle.

Selon un autre exemple de réalisation de l'invention compatible avec les précédents, pour chacune des stations de contrôle de la pluralité de stations de contrôle, le procédé de contrôle peut comporter les étapes suivantes :
- détermination d'une donnée de statut représentative d'un statut courant de ladite au moins une station de contrôle, le statut courant étant choisi parmi le groupe comportant un statut tout validé correspondant à l'état validé de chacun des organes inspectés, un statut non validé correspondant à l'état non validé d'un au moins des organes inspectés, un statut en cours d'inspection d'une station de contrôle et un statut d'inspection non effectuée d'une station de contrôle,
- mémorisation de la donnée de statut, et
- affichage sur l'écran de la donnée de statut.

Par analogie avec la donnée d'état d'une instruction, une telle donnée de statut peut également être affichée en utilisant un code couleur prédéterminé. Selon un exemple de réalisation, la couleur matérialisant la station de contrôle sur l'écran peut varier en fonction de la donnée de statut de chaque station.

Ainsi, lorsque le statut courant d'une station de contrôle est le statut tout validé, la couleur de la station peut être verte. Lorsque le statut courant d'une station de contrôle est le statut non validé, la couleur de cette station peut être rouge.

Lorsque le statut courant d'une station de contrôle est le statut en cours d'inspection, la couleur de la station peut être orange. Lorsque le statut courant d'une station de contrôle est le statut d'inspection non effectuée, la couleur de cette station peut être bleue.

Lorsque l'état courant d'une instruction est l'état d'inspection non effectuée, la couleur de fond de cette instruction peut être bleue.

Selon un exemple avantageux, le procédé de contrôle peut comporter un affichage sur l'écran d'une donnée de position représentative de la station de contrôle courante.

Une telle donnée de position peut par exemple comporter un cadran circulaire muni de plusieurs points équirépartis en azimut autour d'un aéronef représenté en vue de dessus ou de dessous sur l'écran. L'un des points correspondant à la station de contrôle courante peut être alors par exemple affiché avec une couleur distincte de celle correspondant aux autres points.

La présente invention a aussi pour objet un système de contrôle d'une pluralité de stations de contrôle d'un aéronef, chaque station de contrôle comportant au moins un organe à inspecter par un opérateur.

Selon l'invention, un tel système de contrôle est remarquable en ce qu'il comporte :
- un terminal électroportatif porté par l'opérateur, le terminal électroportatif comportant un écran et une interface de sélection,
- un senseur de détermination d'une position courante du terminal électroportatif par rapport à l'aéronef,
- une unité d'identification d'une station de contrôle courante parmi la pluralité de stations de contrôle, la station de contrôle courante étant identifiée en fonction de la position courante du terminal électroportatif par rapport à l'aéronef,
- un organe de détermination d'au moins une image courante de l'aéronef représentative de la station de contrôle courante, l'organe de détermination étant configuré pour afficher la ou les images courantes de l'aéronef sur l'écran,
- une unité de stockage pour stocker un modèle en trois dimensions de l'aéronef, le modèle comportant au moins un composant d'interface graphique correspondant audit au moins un organe à inspecter de la station de contrôle courante, et
- une unité de traitement configurée pour afficher le ou les composants d'interface graphique en superposition de l'image courante sur l'écran, et en ce que l'interface de sélection permet de sélectionner un résultat relatif à une inspection dudit au moins un organe, le résultat correspondant à un état validé ou un état non validé dudit au moins un organe inspecté, ce résultat étant mémorisé dans une mémoire.

Autrement dit, un tel système de contrôle d'une pluralité de stations de contrôle permet d'identifier au moyen du senseur la position courante du terminal électroportatif relativement par rapport à l'aéronef.

En fonction de cette position courante du terminal électroportatif, l'unité d'identification en déduit quelle est la station de contrôle courante. Une telle station de contrôle courante peut par exemple être la station de contrôle présentant la plus petite distance par rapport au terminal électroportatif.

Eventuellement, lorsque l'opérateur sélectionne l'état validé de l'unique organe d'une station de contrôle, ou de tous les organes d'une station de contrôle, l'unité d'identification peut automatiquement identifier la station de contrôle suivante selon un ordre prédéfini et mémorisé comme étant la nouvelle station de contrôle courante.

L'organe de détermination d'au moins une image courante peut alors choisir et afficher une image courante de l'aéronef sur l'écran correspondant à cette station de contrôle courante.

En outre, le modèle en trois dimensions de l'aéronef peut être notamment choisi comme étant un modèle de réalité virtuelle ou encore de réalité augmentée.

L'unité de traitement est en outre configurée pour afficher le ou les composants d'interface graphique en procédant éventuellement à un recadrage pour faire correspondre ce ou ces composants d'interface graphique avec l'image courante affichée.

Le système de contrôle peut par exemple servir d'outil facilitant la formation des opérateurs en améliorant l'ergonomie du contrôle des différents organes à inspecter.

Selon un mode de réalisation avantageux, l'unité d'identification, l'organe de détermination d'au moins une image courante et l'unité de traitement peuvent être également agencés sur le terminal électroportatif. En outre, l'unité d'identification, l'organe de détermination d'au moins une image courante et l'unité de traitement peuvent être formées par un même calculateur ou par plusieurs calculateurs connectés entre eux pour communiquer.

Par ailleurs, l'unité d'identification, l'organe de détermination d'au moins une image courante et l'unité de traitement peuvent par exemple comprendre respectivement chacun au moins un processeur et au moins une mémoire, au moins un circuit intégré, au moins un système programmable, au moins un circuit logique, ces exemples ne limitant pas la portée donnée aux expressions « unité d'identification », « organe de détermination d'au moins une image courante » et « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

En outre, l'interface de sélection du terminal électroportatif peut être par exemple un dispositif de pointage, un clavier ou encore une dalle tactile superposée sur l'écran. Le terminal électroportatif peut quant à lui être par exemple formé par un ordinateur, une tablette, un « smartphone ».

Avantageusement, un tel système de contrôle peut comporter un dispositif de détermination et d'affichage sur l'écran d'au moins une instruction correspondant audit au moins un organe à inspecter de la station de contrôle courante, la ou les instructions étant stockées dans une autre mémoire, l'écran étant configuré pour afficher la ou les instructions, le dispositif de sélection du terminal électroportatif permettant à l'opérateur de sélectionner la ou les instructions.

Un tel dispositif de détermination et d'affichage d'au moins une instruction permet ainsi de lister par exemple dans un tableau ou une colonne toutes les instructions correspondant aux organes à inspecter pour une station de contrôle donnée.

En pratique, le terminal électroportatif peut comporter la mémoire, l'autre mémoire et l'unité de stockage.

Par suite, le terminal électroportatif permet de stocker à la fois le résultat correspondant à un état validé ou un état non validé dudit au moins un organe inspecté, la ou les instructions à effectuer pour inspecter le ou les organes et le modèle en trois dimensions de l'aéronef.

Eventuellement, le terminal électroportatif peut également permettre de stocker la ou les données d'état représentatives de l'état courant de chaque instruction, la ou les données de statut représentatives d'un statut courant de chaque station de contrôle.

Selon un autre exemple de réalisation avantageux, le senseur de détermination d'une position courante peut comporter au moins deux émetteurs de signaux électromagnétiques agencés sur l'aéronef, les émetteurs permettant d'émettre les signaux électromagnétiques à 360 degrés autour de l'aéronef.

De tels émetteurs de signaux électromagnétiques peuvent être agencés par exemple au niveau ou à proximité de chacune des stations de contrôle et/ou être répartis sur l'aéronef pour couvrir toutes les stations de contrôle.

En pratique, le senseur de détermination d'une position courante peut comporter une antenne réceptrice captant les signaux électromagnétiques, l'antenne réceptrice étant agencée sur le terminal électroportatif, l'unité d'identification étant configurée pour analyser les signaux électromagnétiques et identifier la station de contrôle courante.

Par suite, les signaux électromagnétiques émis par les émetteurs sont captés par l'antenne réceptrice, puis éventuellement transmis à l'unité d'identification qui peut en déduire quelle est la station de contrôle courante.

Selon un autre exemple de réalisation de l'invention compatible avec les précédents, l'unité de traitement peut comporter une unité de recalage configurée pour réaliser un recalage du ou des composants d'interface graphique par rapport à ladite au moins une image courante.

Une telle unité de recalage est ainsi interfacée avec l'unité de traitement configurée pour afficher le ou les composants d'interface graphique. Eventuellement, l'unité de traitement configurée pour afficher le ou les composants d'interface graphique et l'unité de recalage peuvent comporter chacune un ou plusieurs calculateurs en commun ou encore être formées par un unique calculateur multitâche.

Selon un exemple de réalisation avantageux compatible avec les précédents, l'unité de traitement peut être agencée en tout ou partie dans le terminal électroportatif.

L'invention et ses avantages apparaîtront avec plus de détails dans le cadre de la description qui suit avec des exemples donnés à titre illustratif en référence aux figures annexées qui représentent :
la figure 1, un schéma de principe illustrant un système de contrôle conforme à l'invention,
la figure 2, une première image courante d'un aéronef,
la figure 3, une vue perspective d'une première variante de terminal électroportatif,
la figure 4, une vue perspective d'une seconde variante de terminal électroportatif,
la figure 5, une seconde image courante d'un aéronef,
la figure 6, ladite seconde image courante d'un aéronef complétée avec des instructions,
la figure 7, une première portion d'écran affichée sur un terminal électroportatif,
la figure 8, une deuxième portion d'écran affichée sur un terminal électroportatif,
la figure 9, une troisième portion d'écran affichée sur un terminal électroportatif à un premier instant d'un procédé de contrôle,
la figure 10, une troisième portion d'écran affichée sur un terminal électroportatif à un deuxième instant d'un procédé de contrôle,
la figure 11], une troisième portion d'écran affichée sur un terminal électroportatif à un troisième instant d'un procédé de contrôle, et
la figure 12, un logigramme illustrant les étapes d'un procédé de contrôle conforme à l'invention.

Les éléments présents dans plusieurs figures distinctes sont affectés d'une seule et même référence.

Comme déjà évoqué, l'invention se rapporte à un procédé et à un système de contrôle d'une pluralité de stations de contrôle d'un aéronef.

Tel que représenté à la figure 1, le système de contrôle 50 comporte un terminal électroportatif 8, 9 porté ou pris en mains par un opérateur tel un pilote de l'aéronef ou un technicien. En outre, un tel terminal électroportatif 8, 9 comporte un écran 10 et une interface de sélection 51 présentant, par exemple, un dispositif de pointage, un clavier ou une dalle tactile superposée sur l'écran 10.

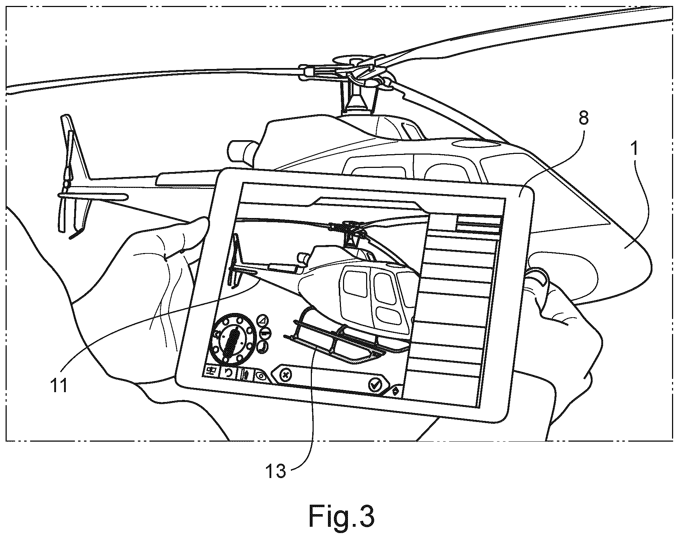

Selon une première variante telle que représentée à la figure 3, le terminal électroportatif 8 peut ainsi être formé par une tablette tactile.

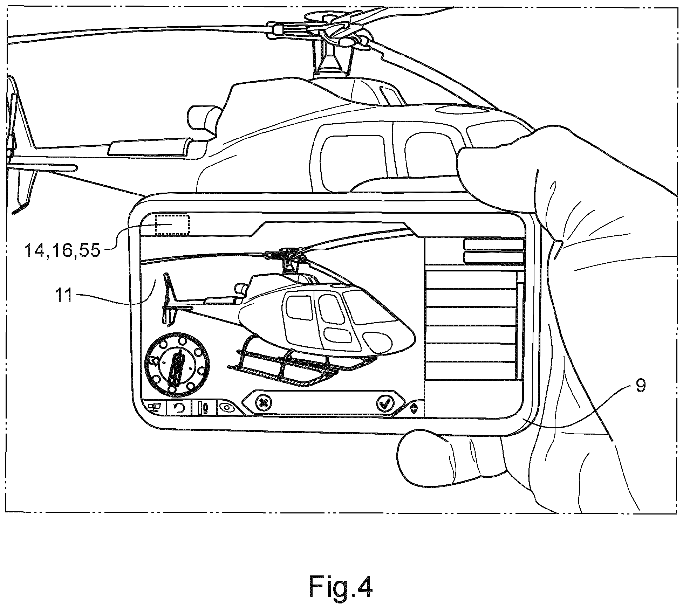

Selon une seconde variante telle que représentée à la figure 4, le terminal électroportatif 9 peut également être formé par une smartphone.

En outre, tel que représenté à la figure 2, un aéronef 1 peut présenter une pluralité de stations de contrôle 2, 3, 4, 5, 12, 13 comportant chacune au moins un organe 6, 7 à inspecter par un opérateur.

Le système de contrôle 50 comporte alors un senseur 52 de détermination d'une position courante du terminal électroportatif 8, 9 par rapport à l'aéronef 1.

Un tel senseur 52 de détermination d'une position courante peut, par exemple, comporter au moins deux émetteurs 58, 59 de signaux électromagnétiques positionnés sur l'aéronef 1. De tels émetteurs 58, 59 permettent alors d'émettre des signaux électromagnétiques tout autour de l'aéronef 1 pour couvrir tous les déplacements de l'opérateur et de son terminal électroportatif 8, 9.

Par ailleurs, le senseur 52 peut également comporter une antenne réceptrice 60 adaptée pour recevoir les signaux électromagnétiques émis par les émetteurs 58, 59. L'antenne réceptrice 60 est alors avantageusement intégrée ou solidaire du terminal électroportatif 8, 9.

De plus, le système de contrôle 50 comporte une unité d'identification 53 configurée pour identifiée une station de contrôle courante 12, 22 parmi la pluralité de stations de contrôle 2, 3, 4, 5, 12, 13.

Une telle unité d'identification 53 peut ainsi être reliée ou intégrée au terminal électroportatif 8, 9. L'unité d'identification 53 peut ainsi être configurée pour analyser les signaux électromagnétiques reçus par l'antenne 60 et identifier la station de contrôle courante 12, 22.

En outre, le système de contrôle 50 comporte également un organe de détermination 54 d'au moins une image courante 11, 21 de l'aéronef 1 représentative de la station de contrôle courante 12, 22. Un tel organe de détermination 54 permet alors d'afficher la ou les images courantes 11, 21 de l'aéronef 1 sur l'écran 10. L'organe de détermination 54 peut ainsi être relié par voie filaire ou non filaire au terminal électroportatif 8, 9. Alternativement, l'organe de détermination 54 peut également être intégré au terminal électroportatif 8, 9.

De plus, le système de contrôle 50 comporte une unité de stockage 55 permettant de stocker un modèle en trois dimensions de l'aéronef 1. Un tel modèle présente au moins un composant d'interface graphique 13, 23 correspondant à l'organe 6, 7 à inspecter de la station de contrôle courante 12, 22. L'unité de stockage 55 peut ainsi être reliée par voie filaire ou non filaire au terminal électroportatif 8, 9. Alternativement, l'unité de stockage 55 peut également être intégrée au terminal électroportatif 8, 9.

Au surplus, le système de contrôle 50 comporte une unité de traitement 56 configurée pour afficher le ou les composants d'interface graphique 13, 23 en superposition de la ou des images courantes 12, 22 sur l'écran 10. L'unité de traitement 56 peut ainsi être reliée par voie filaire ou non filaire au terminal électroportatif 8, 9. Alternativement, l'unité de traitement 56 peut également être intégrée au terminal électroportatif 8, 9.

Par ailleurs, l'unité d'identification 53, l'organe de détermination 54 d'au moins une image courante et l'unité de traitement 56 peuvent par exemple comprendre respectivement chacun au moins un calculateur.

Tel que représenté aux figures 2 à 4, un composant d'interface graphique 13 de forme filaire est alors superposé sur un train d'atterrissage de l'aéronef 1 que comporte l'image courante 11.

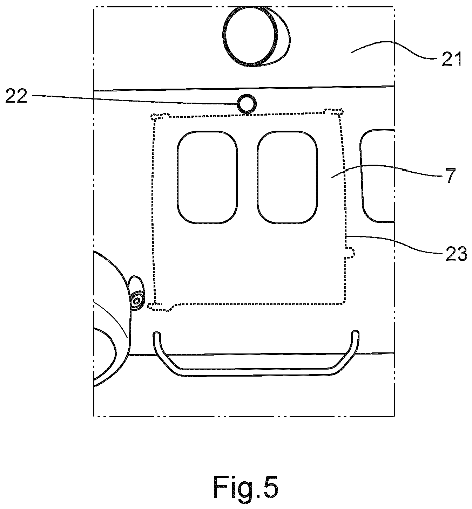

Tel que représenté à la figure 5, un composant d'interface graphique 23 de forme rectangulaire est alors superposé sur une porte de l'aéronef 1 que comporte l'image courante 21.

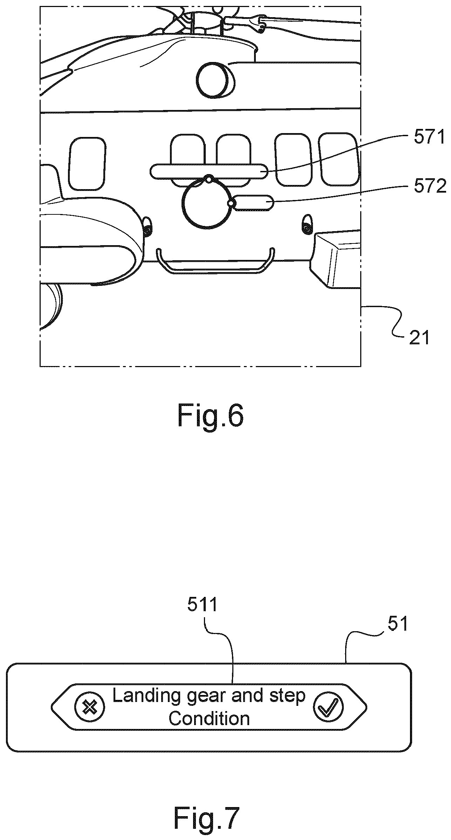

En outre, telle que représentée à la figure 7, l'interface de sélection 51 du terminal électroportatif 8, 9 permet à l'opérateur de sélectionner un résultat relatif à une inspection du ou des organes 6, 7.

Un tel résultat peut alors correspondre à un état d'instruction validée par exemple si l'opérateur fait glisser un doigt sur une zone de sélection 511 de la gauche vers la droite.

Alternativement, le résultat peut correspondre à un état d'instruction non validée par exemple si l'opérateur fait glisser un doigt sur la zone de sélection 511 de la droite vers la gauche.

Une fois le résultat sélectionné avec l'interface de sélection 51, le résultat est alors mémorisé dans une mémoire 14 du système de contrôle 50.

Par ailleurs, le système de contrôle 50 peut comporter un dispositif de détermination et d'affichage 57 sur l'écran 10 d'au moins une instruction 571, 572 correspondant à un organe 6, 7 à inspecter de la station de contrôle courante 12, 22. Le dispositif de détermination et d'affichage 57 peut ainsi être relié par voie filaire ou non filaire au terminal électroportatif 8, 9. Alternativement, le dispositif de détermination et d'affichage 57 peut également être intégré au terminal électroportatif 8, 9.

Telle que représentée à la figure 6, une telle instruction 571, 572 peut en effet être affichée à l'écran 10 et superposée sur l'image courante 21 comportant une porte de l'aéronef 1 correspondant dans cet exemple à l'organe 7 à inspecter. Le dispositif de sélection 51 du terminal électroportatif 8, 9 permet alors à l'opérateur de sélectionner l'une des instructions affichées.

Cette ou ces instructions 571, 572 peuvent être stockées dans une autre mémoire 16. Une telle autre mémoire peut être distincte ou alternativement confondue avec la mémoire 14. Avantageusement, la mémoire 14, l'autre mémoire 16 et l'unité de stockage 55 peuvent être intégrés au terminal électroportatif 8, 9.

Tel que représenté aux figures 3 4 et 8, le dispositif de détermination et d'affichage 57 d'au moins une instruction 571, 572 peut notamment permettre de classer et de lister par exemple dans un tableau ou une colonne 573 toutes les instructions correspondant aux organes 6,7 à inspecter pour une station de contrôle donnée.

En outre, un état courant 151 de la ou des instructions 571, 572 peut être choisi parmi le groupe comportant un état d'instruction validée, un état d'instruction non validée, un état d'instruction oubliée et un état d'instruction non effectuée.

Un fond ou un type de remplissage de chaque case de la colonne 573 permet alors de visuellement identifier l'état courant 151 de chacune des instructions 571, 572.

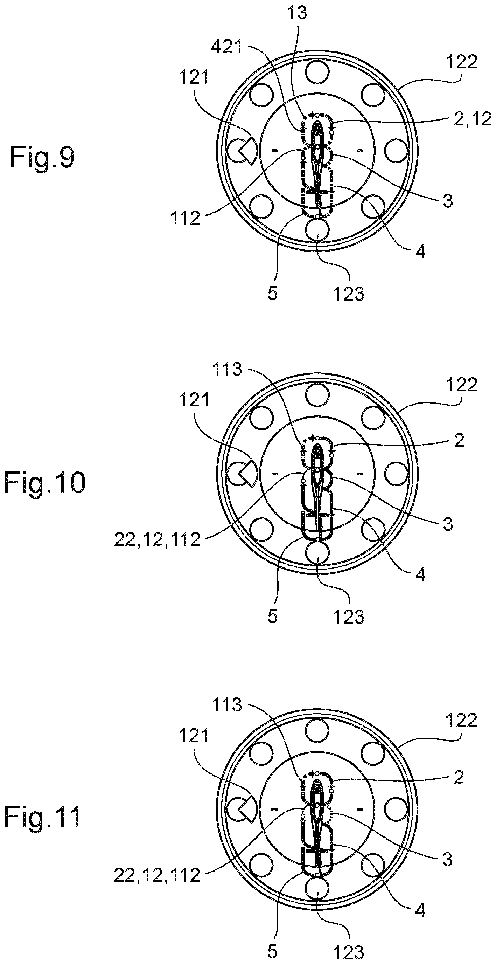

Tel que représenté aux figures 9 à 11, l'écran 10 peut également afficher une donnée de position 121 représentative de la station de contrôle courante 12, 22.

Une telle donnée de position 121 peut, par exemple, comporter un cadran circulaire 122 muni de plusieurs points 123 équirépartis en azimut autour d'un aéronef représenté en vue de dessus ou de dessous sur l'écran 10. L'un des points 123 correspondant à la station de contrôle courante 12, 22 peut être alors par exemple affiché avec une couleur distincte de celle correspondant aux autres points 123.

De plus, les figures 9 à 11 permettent également d'illustrer une donnée de statut représentative d'un statut courant 421 de chaque station de contrôle 2, 3, 4, 5, 112, 113. Un tel statut courant 421 est alors choisi parmi le groupe comportant un statut tout validé correspondant à l'état validé de la station de contrôle 2, 3, 4, 5, 112, 113, un statut non validé correspondant à l'état non validé de la station de contrôle 2, 3, 4, 5, 112, 113, un statut en cours d'inspection de la station de contrôle 2, 3, 4, 5, 112, 113 et un statut d'inspection non effectuée de la station de contrôle 2, 3, 4, 5, 112, 113.

Par exemple à la figure 9, toutes les stations de contrôle 2, 3, 4, 5, 112, 113 n'ont pas encore été inspectées. Ainsi, le type ou la couleur des traits, représentatifs des différentes stations de contrôle 2, 3, 4, 5, 112, 113 et entourant l'aéronef représenté en vue de dessus, sont identiques. Ces traits peuvent être de couleur bleue et sont alors représentés par exemple par des traits mixtes sur la figure 9.

En revanche à la figure 10, le statut courant des stations de contrôle 2, 3, 4, 5 est le statut tout validé, la couleur de ces traits peut être par exemple verte et représentés par des traits continus épais sur la figure 10. Le statut courant de la station de contrôle 112 est quant à lui le statut en cours d'inspection, la couleur de ce trait peut être par exemple orange et représentée par un trait continu fin sur la figure 10. La station de contrôle 112 correspond alors à la station de contrôle courante 12, 22.

Selon la figure 11, le statut courant des stations de contrôle 2, 4, 5 est le statut tout validé. Le statut courant de la station de contrôle 3 est le statut non validé, la couleur de cette station peut être rouge et représentée par un trait pointillé sur la figure 11.

Le statut courant de la station de contrôle 11 est quant à lui le statut en cours d'inspection, la couleur de ce trait peut être par exemple orange et représentée par un trait continu fin sur la figure 10. La station de contrôle 112 correspond alors à la station de contrôle courante 12.

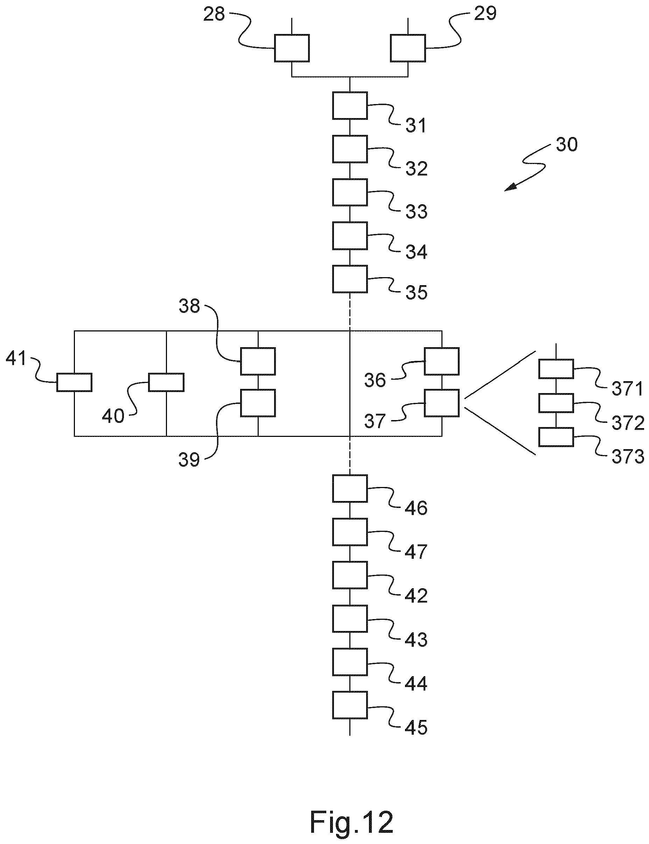

Telle que représentée à la figure 12, l'invention concerne également un procédé de contrôle 30 comportant une détermination 31 d'une position courante du terminal électroportatif 8, 9 par rapport à l'aéronef 1, une identification 32 avec le terminal électroportatif 8, 9 d'une station de contrôle courante 12, 22 parmi les différentes de stations de contrôle 2, 3, 4, 5, 112, 113 et une détermination 33 d'au moins une image courante 11, 21 de l'aéronef 1 représentative de la station de contrôle courante 12, 22.

En outre, une telle détermination 33 d'au moins une image courante 11, 21 peut être conditionnée en fonction d'une sélection 28 d'un mode de fonctionnement en réalité virtuelle ou d'une sélection 29 d'un mode de fonctionnement en réalité augmentée.

Lorsque la sélection 28 du mode de fonctionnement en réalité virtuelle est mise en œuvre, la détermination 33 d'au moins une image courante 11, 21 de l'aéronef 1 est alors générée par sélection de l'image courante 11, 21 parmi une pluralité d'images mémorisées de l'aéronef 1.

En revanche, lorsque la sélection 29 d'un mode de fonctionnement en réalité augmentée est mise en œuvre, la détermination 33 d'au moins une image courante 11, 21 de l'aéronef 1 est obtenue au moyen d'une caméra 17 intégrée au terminal électroportatif 8, 9 effectuant en temps réel une acquisition d'images de l'aéronef 1.

Par ailleurs, un tel procédé de contrôle 30 comporte ensuite un affichage 34 sur l'écran 10 du terminal électroportatif 8, 9 de cette ou de ces images courantes 11, 21 de l'aéronef 1 et un affichage 35 sur l'écran 10 d'au moins un composant d'interface graphique 13, 23 correspondant à un organe 6, 7 à inspecter de la station de contrôle courante 12, 22. Un tel affichage 34 est réalisé en superposant le ou les composants d'interface graphique 13, 23 sur une image courante 11, 21.

Par exemple et tel que représenté aux figures 2 à 4, un composant d'interface graphique 13 peut être superposé sur le train d'atterrissage formant un organe 6 de l'aéronef 1. Selon un autre exemple représenté à la figure 5, un composant d'interface graphique 23 peut être superposé sur la porte de l'aéronef formant un autre organe 7 de l'aéronef 1.

Le procédé de contrôle 30 comporte alors une sélection 46 sur le terminal électroportatif 8, 9 et une mémorisation 47 dans la mémoire 14 du résultat relatif à l'inspection de l'organe 6, 7, ce résultat correspondant à un état validé ou un état non validé de l'organe 6, 7 inspecté.

Le procédé 30 peut également comporter une détermination et un affichage 36 sur l'écran 10 d'au moins une instruction 571, 572 correspondant à l'organe 6, 7 à inspecter de la station de contrôle courante 12, 22 et une sélection 37 au moyen du terminal électroportatif 8, 9 de la ou des instructions 571, 572 par l'opérateur.

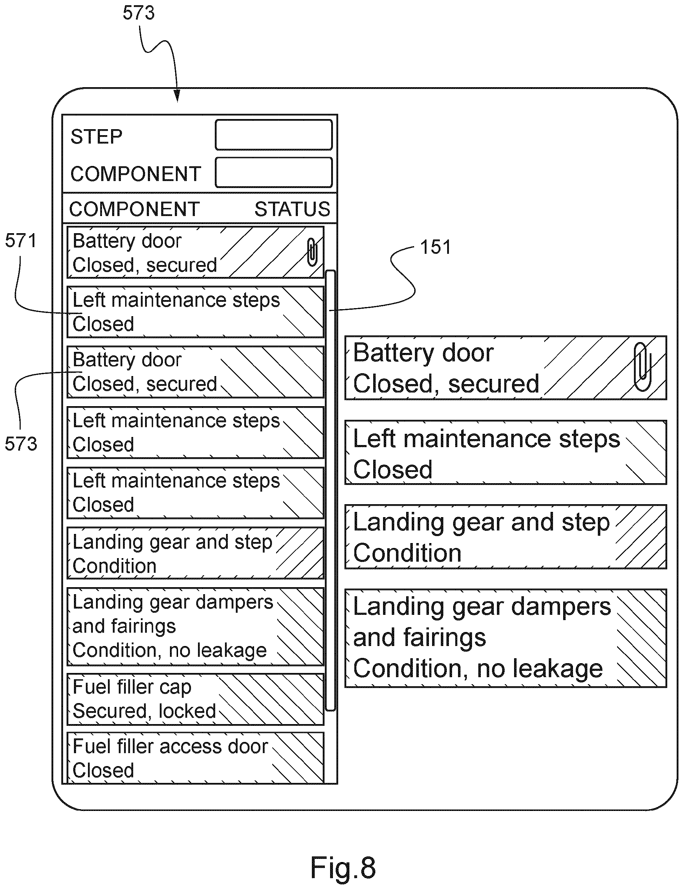

Eventuellement, pour chacune des instructions 571, 572, le procédé de contrôle 30 peut comporter une détermination 371 d'une donnée d'état représentative de l'état courant 151 des instructions 571, 572 tel que précédemment représenté à la figure 8. Le procédé de contrôle peut alors comporter une mémorisation 372 de la donnée d'état et un affichage 373 sur l'écran 10 de cette donnée d'état.

Avantageusement, le procédé de contrôle 30 peut également comporter une acquisition 38 d'au moins une image de l'organe 6, 7 à inspecter opérée au moyen d'une caméra 17 intégrée au terminal électroportatif 8, 9 et une transmission 39 de la ou des images depuis le terminal électroportatif 8, 9 vers un serveur externe 18 représenté à la figure 1.

En outre, le procédé de contrôle 30 peut comporter un recalage 40 du ou des composants d'interface graphique 13, 23 par rapport à l'image courante 11, 21. Un tel recalage 40 peut être opéré au moyen des deux émetteurs 58, 59 de signaux électromagnétiques agencés sur l'aéronef 1

Selon une autre variante du procédé de contrôle 30, un tel procédé de contrôle 30 peut également comporter une acquisition supplémentaire 41 d'images de l'organe 6, 7 à inspecter. Dans ce cas, le système de contrôle 50 peut comporter un autre aéronef 24, tel un drone, équipé d'une caméra distante 20 permettant d'acquérir les images supplémentaires de l'organe 6, 7 à inspecter.

Cette acquisition supplémentaire 41 peut être opérée au moyen de la caméra distante 20 agencée sur l'autre aéronef 24. Une telle acquisition supplémentaire 41 d'images peut notamment permettre de réaliser un recalage du composant d'interface graphique 13, 23 par rapport à l'image courante 11, 21.

Selon un exemple de réalisation compatible avec les précédents, pour chacune des stations de contrôle 2, 3, 4, 5, 112, 113, le procédé de contrôle 30 peut comporter une détermination 42 d'une donnée de statut représentative du statut courant 421 de la station de contrôle 2, 3, 4, 5, 112, 113, une mémorisation 43 de la donnée de statut et un affichage 44 sur l'écran 10 de la donnée de statut.

De même comme déjà évoqué aux figures 9 à 11, le procédé de contrôle 30 peut comporter un affichage 45 sur l'écran 10 d'une donnée de position 121 représentative de ladite station de contrôle courante 12, 22.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de contrôle (30) d'une pluralité de stations de contrôle (2, 3, 4, 5, 12, 22, 112, 113) d'un aéronef (1), chaque station de contrôle (2, 3, 4, 5, 12, 22, 112, 113) comportant au moins un organe (6, 7) à inspecter par un opérateur,
**caractérisé en ce que** ledit procédé de contrôle (30) comporte les étapes suivantes :
• détermination (31) d'une position courante d'un terminal électroportatif (8, 9) par rapport audit aéronef (1), ledit terminal électroportatif (8, 9) étant porté par ledit opérateur,
• identification (32) avec ledit terminal électroportatif (8, 9) d'une station de contrôle courante (12, 22) parmi ladite pluralité de stations de contrôle (2, 3, 4, 5, 12, 22, 112, 113), ladite identification (32) étant fonction de ladite position courante dudit terminal électroportatif (8, 9) par rapport audit aéronef (1),
• détermination (33) d'au moins une image courante (11, 21) dudit aéronef (1) représentative de ladite station de contrôle courante (12, 22),
• affichage (34) sur un écran (10) dudit terminal électroportatif (8, 9) de ladite au moins une image courante (11, 21) dudit aéronef (1),
• affichage (35) sur ledit écran (10) d'au moins un composant d'interface graphique (13, 23) correspondant audit au moins un organe (6, 7) à inspecter de ladite station de contrôle courante (12, 22), ledit au moins un composant d'interface graphique (13, 23) étant affiché en superposition de ladite au moins une image courante (11, 21), et
• sélection (46) sur ledit terminal électroportatif (8, 9) et mémorisation (47) dans une mémoire (14) d'un résultat relatif à une inspection dudit au moins un organe (6, 7), ledit résultat correspondant à un état validé ou un état non validé dudit au moins un organe (6, 7) inspecté.

2. Procédé selon la revendication 1,
**caractérisé en ce que** ledit procédé (30) comporte les étapes suivantes :
• détermination et affichage (36) sur ledit écran (10) d'au moins une instruction (571, 572) correspondant audit au moins un organe (6, 7) à inspecter de ladite station de contrôle courante (12, 22), une autre mémoire (16) mémorisant pour chaque organe (6, 7) au moins une dite instruction (571, 572), et
• sélection (37) au moyen dudit terminal électroportatif (8, 9) de ladite au moins une instruction (571, 572) par ledit opérateur.

3. Procédé selon la revendication 2,
**caractérisé en ce que**, pour chacune de ladite au moins une instruction (571, 572), ledit procédé de contrôle (30) comporte les étapes suivantes :
• détermination (371) d'une donnée d'état représentative d'un état courant (151) de ladite au moins une instruction (571, 572) dudit au moins un organe (6, 7) inspecté, ledit état courant (151) étant choisi parmi le groupe comportant un état d'instruction validée, un état d'instruction non validée, un état d'instruction oubliée et un état d'instruction non effectuée,
• mémorisation (372) de ladite donnée d'état, et
• affichage (373) sur ledit écran (10) de ladite donnée d'état.

4. Procédé selon l'une quelconque des revendications 1 à 3, **caractérisé en ce que** ledit procédé de contrôle (30) comporte une sélection (28) d'un mode de fonctionnement en réalité virtuelle, ladite détermination (33) d'au moins une image courante (11, 21) dudit aéronef (1) étant opérée par sélection de ladite au moins une image courante (11, 21) parmi une pluralité d'images mémorisées dudit aéronef (1).

5. Procédé selon l'une quelconque des revendications 1 à 4, **caractérisé en ce que** ledit procédé de contrôle (30) comporte une sélection (29) d'un mode de fonctionnement en réalité augmentée, ladite détermination (33) d'au moins une image courante (11, 21) dudit aéronef (1) étant opérée au moyen d'une caméra (17) intégrée audit terminal électroportatif (8, 9).

6. Procédé selon l'une quelconque des revendications 1 à 5, **caractérisé en ce que** ledit procédé de contrôle (30) comporte une acquisition (38) d'au moins une image dudit au moins un organe (6, 7) à inspecter opérée au moyen d'une caméra (17) intégrée audit terminal électroportatif (8, 9) et une transmission (39) de ladite au moins une image depuis ledit terminal électroportatif (8, 9) vers un serveur externe (18).

7. Procédé selon l'une quelconque des revendications 1 à 6, **caractérisé en ce que** ledit procédé de contrôle (30) comporte un recalage (40) dudit au moins un composant d'interface graphique (13, 23) par rapport à ladite au moins une image courante (11, 21), ledit recalage (40) étant opéré au moyen d'au moins deux émetteurs (58, 59) de signaux électromagnétiques agencés sur ledit aéronef (1), lesdits au moins deux émetteurs (58, 59) permettant d'émettre desdits signaux électromagnétiques à 360 degrés autour dudit aéronef (1).

8. Procédé selon l'une quelconque des revendications 1 à 7, **caractérisé en ce que** ledit procédé de contrôle (30) comporte une acquisition supplémentaire (41) d'images dudit au moins un organe (6, 7) à inspecter, ladite acquisition supplémentaire (41) étant opérée au moyen d'une caméra distante (20) agencée sur un autre aéronef (24) en vol, ladite acquisition supplémentaire (41) d'images permettant de réaliser un recalage dudit au moins un composant d'interface graphique (13, 23) par rapport à ladite au moins une image courante (11, 21).

9. Procédé selon l'une quelconque des revendications 1 à 8, **caractérisé en ce que**, pour chacune des stations de contrôle (2, 3, 4, 5, 12, 22, 112, 113) de ladite pluralité de stations de contrôle (2, 3, 4, 5, 12, 22, 112, 113), ledit procédé de contrôle (30) comporte les étapes suivantes :
• détermination (42) d'une donnée de statut représentative d'un statut courant (421) de ladite au moins une station de contrôle (2, 3, 4, 5, 12, 22, 112, 113), ledit statut courant (421) étant choisi parmi le groupe comportant un statut tout validé correspondant à l'état validé de chacun desdits organes (6, 7) inspectés, un statut non validé correspondant à l'état non validé d'un au moins desdits organes (6, 7) inspectés, un statut en cours d'inspection ladite au moins une station de contrôle (2, 3, 4, 5, 12, 22, 112, 113) et un statut d'inspection non effectuée ladite au moins une station de contrôle (2, 3, 4, 5, 12, 22, 112, 113),
• mémorisation (43) de ladite donnée de statut, et
• affichage (44) sur ledit écran (10) de ladite donnée de statut.

10. Procédé selon l'une quelconque des revendications 1 à 9,
**caractérisé en ce que** ledit procédé de contrôle (30) comporte un affichage (45) sur ledit écran (10) d'une donnée de position (121) représentative de ladite station de contrôle courante (12, 22).

11. Système de contrôle (50) d'une pluralité de stations de contrôle (2, 3, 4, 5, 12, 22, 112, 113) d'un aéronef (1), chaque station de contrôle (2, 3, 4, 5, 12, 22, 112, 113) comportant au moins un organe (6, 7) à inspecter par un opérateur,
**caractérisé en ce que** ledit système de contrôle (50) comporte :
• un terminal électroportatif (8, 9) porté par ledit opérateur, ledit terminal électroportatif (8, 9) comportant un écran (10) et une interface de sélection (51),
• un senseur (52) de détermination d'une position courante dudit terminal électroportatif (8, 9) par rapport audit aéronef (1),
• une unité d'identification (53) d'une station de contrôle courante (12, 22) parmi ladite pluralité de stations de contrôle (2, 3, 4, 5, 12, 22, 112, 113), ladite station de contrôle courante (12, 22) étant identifiée en fonction de ladite position courante dudit terminal électroportatif (8, 9) par rapport audit aéronef (1),
• un organe de détermination (54) d'au moins une image courante (11, 21) dudit aéronef (1) représentative de ladite station de contrôle courante (12, 22), ledit organe de détermination (54) étant configuré pour afficher ladite au moins une image courante (11, 21) dudit aéronef (1) sur ledit écran (10), et
• une unité de stockage (55) pour stocker un modèle en trois dimensions dudit aéronef (1), ledit modèle comportant au moins un composant d'interface graphique (13, 23) correspondant audit au moins un organe (6, 7) à inspecter de ladite station de contrôle courante (12, 22),
• une unité de traitement (56) configurée pour afficher ledit au moins un composant d'interface graphique (13, 23) en superposition de ladite au moins une image courante (11, 21) sur ledit écran (10),
et **en ce que** ladite interface de sélection (51) permet de sélectionner un résultat relatif à une inspection dudit au moins un organe (6, 7), ledit résultat correspondant à un état validé ou un état non validé dudit au moins un organe (6, 7) inspecté, ledit résultat étant mémorisé dans une mémoire (14).

12. Système selon la revendication 11,
**caractérisé en ce que** ledit système de contrôle (50) comporte un dispositif de détermination et d'affichage (57) sur ledit écran (10) d'au moins une instruction (571, 572) correspondant audit au moins un organe (6, 7) à inspecter de ladite station de contrôle courante (12, 22), ladite au moins une instruction (571, 572) étant stockée dans une autre mémoire (16), ledit écran (10) étant configuré pour afficher ladite au moins une instruction (571, 572), ledit dispositif de sélection (51) dudit terminal électroportatif (8, 9) permettant audit opérateur de sélectionner ladite au moins une instruction (571, 572).

13. Système selon la revendication 12,
**caractérisé en ce que** ledit terminal électroportatif (8, 9) comporte ladite mémoire (14), ladite autre mémoire (16) et ladite unité de stockage (55).

14. Système selon l'une quelconque des revendications 11 à 13,
**caractérisé en ce que** ledit senseur (52) de détermination d'une position courante comporte au moins deux émetteurs (58, 59) de signaux électromagnétiques agencés sur ledit aéronef (1), lesdits au moins deux émetteurs (58, 59) permettant d'émettre lesdits signaux électromagnétiques à 360 degrés autour dudit aéronef (1).

15. Système selon la revendication 14,
**caractérisé en ce que** ledit senseur (52) de détermination d'une position courante comporte une antenne réceptrice (60) captant lesdits signaux électromagnétiques, ladite antenne réceptrice (60) étant agencée sur ledit terminal électroportatif (8, 9), ladite unité d'identification (53) étant configurée pour analyser lesdits signaux électromagnétiques et identifier ladite station de contrôle courante (12, 22).

16. Système selon l'une quelconque des revendications 11 à 15,
**caractérisé en ce que** ladite unité de traitement (56) comporte une unité de recalage (61) configurée pour réaliser un recalage dudit au moins un composant d'interface graphique (13, 23) par rapport à ladite au moins une image courante (11, 21).
